(19) Europäisches Patentamt
European Patent Office
Office européen des brevets

(11) **EP 2 444 755 A2**

(12) **EUROPÄISCHE PATENTANMELDUNG**

(43) Veröffentlichungstag:
**25.04.2012 Patentblatt 2012/17**

(51) Int Cl.:
***F24F 12/00*** *(2006.01)*

(21) Anmeldenummer: **11008262.5**

(22) Anmeldetag: **13.10.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **22.10.2010 AT 17592010**

(71) Anmelder: **Drexel und Weiss Energieeffiziente Haustechniksysteme GmbH**
**6960 Wolfurt (AT)**

(72) Erfinder: **Drexel, Christof**
**6922 Wolfurt (AT)**

(74) Vertreter: **Hofmann, Ralf U. et al**
**Hofmann & Fechner**
**Patentanwälte**
**Egelseestrasse 65a**
**Postfach 61**
**6806 Feldkirch (AT)**

(54) **Verfahren zum Betreiben einer Lüftungseinrichtung**

(57)     Bei einem Verfahren zum Betreiben einer Lüftungseinrichtung, die einen Wärmetauscher (4) mit einem Abluftkanal, durch den aus dem Gebäudeinneren abgeführte Raumluft strömt, und einem Zuluftkanal aufweist, durch den aus dem Freien zugeführte Frischluft strömt, wird unterhalb eines Temperaturgrenzwertes zum Verhindern eines Verschlusses des Abluftkanals des Wärmetauschers (4) in Folge Vereisung die dem Zuluftkanal zugeführte Frischluft mit mindestens einem Heizelement (10) erwärmt. Die Erwärmung der Frischluft mit dem mindestens einen Heizelement (10) wird sich wiederholend durchgeführt, wobei zwischen den Erwärmungsphasen, in denen die Frischluft erwärmt wird, eine Bildung von Eis zugelassen wird, welches in der folgenden Erwärmungsphase der Frischluft wieder geschmolzen wird. (Figur)

Fig.

EP 2 444 755 A2

**Beschreibung**

Die Erfindung bezieht sich auf ein Verfahren zum Betreiben einer Lüftungseinrichtung, die einen Wärmetauscher mit einem Abluftkanal, durch den aus dem Gebäudeinneren abgeführte Raumluft strömt, und einem Zuluftkanal aufweist, durch den aus dem Freien zugeführte Frischluft strömt, wobei unterhalb eines Temperaturgrenzwertes zum Verhindern eines Verschlusses des Abluftkanals des Wärmetauschers in Folge Vereisung die dem Zuluftkanal zugeführte Frischluft mit mindestens einem Heizelement erwärmt wird.

Bekannt sind Lüftungsanlagen mit Erdwärmetauschern, bei denen die aus dem Freien zuzuführende Frischluft zunächst durch ein im Erdreich verlegtes Rohr geführt wird, welches als Wärmetauscher dient. Die Lüftungsanlage weist weiters einen Wärmetauscher auf, durch den einerseits die aus dem Gebäudeinneren stammende Raumluft und andererseits die Frischluft geführt werden, wobei Wärme der Raumluft auf die Frischluft übertragen wird. Aufgrund des Durchtritts durch den vorgeschalteten Erdwärmetauscher liegt die Temperatur der Frischluft auch bei tiefen Außentemperaturen über 0° Celsius.

Ist kein solcher Erdwärmetauscher vorhanden, so wird mindestens ein, im Allgemeinen elektrisches, Heizelement vorgesehen, mit dem die dem Wärmetauscher zugeführte Frischluft bei tiefen Außentemperaturen vor Eintritt in den Wärmetauscher vorerwärmt wird. Würde eine solche Vorerwärmung entfallen, so könnte durch die Wärmerückgewinnung entstehendes Kondensat, welches aus der durch den Wärmetauscher geführten Raumluft ausfällt, gefrieren, wodurch der Abluftkanal des Wärmetauschers verschlossen würde.

In der Praxis wird die Vorerwärmung der zugeführten Frischluft häufig in Abhängigkeit von der Temperatur geregelt, welche die durch den Wärmetauscher geführte Raumluft nach Austritt aus dem Wärmetauscher aufweist (diese Luft wird üblicherweise als Fortluft bezeichnet), um diese Temperatur über 0° Celsius zu halten. Diese Art der Vorerwärmung der dem Wärmetauscher zugeführten Frischluft (vor Eintritt in den Wärmetauscher wird diese üblicherweise als Außenluft bezeichnet) führt meist zu einem Energieaufwand im Bereich von 200-300 kWh/a, in Einzelfällen aber auch bis zu 1000 kWh/a.

Eine weitere Art der Regelung der Vorerwärmung der Außenluft sieht vor, dass die Außenluft auf einen konstanten Wert von ca. -3,5° Celsius erwärmt wird, wenn die Außentemperatur weniger als diesen Wert beträgt. Bei den üblichen Wirkungsgraden von eingesetzten Wärmetauschern, die im Bereich von 90% liegen, kommt es dann zu einer Oberflächentemperatur des Wärmetauschers, welche noch über dem Gefrierpunkt liegt, sodass eine Bildung von Eis verhindert wird. Der für die Vorerwärmung erforderliche Energieaufwand kann damit auf ca. 100-150 kWh/a reduziert werden, was allerdings immer noch eine beachtenswerte Größe darstellt. Passivhäuser kommen oft mit einer Größenordnung von 1500 kWh/a für die gesamte Haustechnik (Heizen, Lüften, Warmwasser; inklusive Hilfsantriebe) aus. Die Vorerwärmung der Außenluft kann den Verbrauch also durchaus um 10% vergrößern.

Aufgabe der Erfindung ist es ein verbessertes Verfahren der eingangs genannten Art bereitzustellen, durch welches der für die Vorerwärmung der Außenluft erforderliche Energieverbrauch (wenn kein Erdwärmetauscher vorhanden ist) gegenüber den zuvor beschriebenen Verfahren verringert werden kann. Erfindungsgemäß gelingt dies durch ein Verfahren mit den Merkmalen des Anspruchs 1.

Beim Verfahren gemäß der Erfindung wird bei tiefen Außentemperaturen, bei denen eine Vereisungsgefahr des Wärmetauschers besteht, die Erwärmung der Frischluft mit dem mindestens einen Heizelement nicht kontinuierlich durchgeführt sondern diskontinuierlich, also intermittierend, d.h. in sich wiederholenden Erwärmungsphasen. Zwischen diesen Erwärmungsphasen erfolgt keine Vorerwärmung der dem Wärmetauscher zugeführten Frischluft und es wird in diesen Phasen, in denen keine Erwärmung der Frischluft erfolgt (=das mindestens eine Heizelement abgeschaltet wird), eine Eisbildung zugelassen. In den Erwärmungsphasen wird das jeweils gebildete Eis wieder abgetaut. Mit anderen Worten wird die Erwärmung der Frischluft mit dem mindestens einen Heizelement intermittierend in sich wiederholenden Erwärmungsphasen durchgeführt, wobei in einer jeweiligen Erwärmungsphase das Eis geschmolzen wird, welches sich seit der letzten Erwärmungsphase gebildet hat.

Durch diesen Ansatz, bei dem anstelle einer Verhinderung der Eisbildung durch ständige ausreichende Vorerwärmung der zugeführten Außenluft eine solche Eisbildung im beschränkten Maß zugelassen wird und dieses Eis dann wieder aufgetaut wird, kann eine wesentliche Energieeinsparung erzielt werden, die beispielsweise mehr als die Hälfte der sonst zur Eisfreihaltung benötigten Heizenergie betragen kann.

Vorteilhafterweise wird das pro Zeiteinheit durch den Wärmetauscher durchgeführte Luftvolumen (= der Volumenstrom der Luft) über die Dauer einer jeweiligen Erwärmungsphase gegenüber dem zwischen den Erwärmungsphasen vorliegenden Volumenstrom sowohl für die durch den Wärmetauscher geführte Raumluft als auch für die durch den Wärmetauscher geführte Frischluft verringert, vorzugsweise auf einen Wert für die beiden Volumenströme, der im Bereich von 70-100 m3/h liegt. Es kann dadurch bei einem günstigen (nicht zu hohen) Wert der Heizleistung des mindestens einen Heizelements eine ausreichende Vorerwärmung der dem Wärmetauscher zugeführten Frischluft erreicht werden. Durch Wärmeübertragung im Wärmetauscher kann hierbei gegebenenfalls auch die durch den Wärmetauscher geführte Raumluft erwärmt werden, um das gebildete Eis im Abluftkanal des Wärmetauschers zu schmelzen. Es ist hierbei zu bedenken, dass von der Temperaturdifferenz, um die die Frischluft erwärmt wird, nur derjenige Anteil der Temperaturdifferenz für das Abtauen des gebildeten Eises ausgenützt werden kann, durch welchen die Oberfläche des Wärmetauschers auf einen Wert über 0° Celsius aufgeheizt wird. Um auch bei entsprechend tiefen Außentemperaturen einen ausreichend großen Anstieg über 0° Celsius zu erreichen, muss die Frischluft um eine ausreichend große Temperaturdifferenz erwärmt werden, welche vorzugsweise mindestens 30° Celsius, besonders bevorzugt mindestens 40° Celsius beträgt. Beispielsweise kann die Heizleistung, mit der die Vorerwärmung der Frischluft durchgeführt wird, im Bereich von 1 kW bis 1,5 kW liegen.

Vorteilhafterweise ist vorgesehen, dass die Erwärmungsphasen unterschiedlich lang, in Abhängigkeit vom Volumenstrom der durch den Wärmetauscher geführten Raumluft, durchgeführt werden und dass die Dauer einer jeweiligen Erwärmungsphase weiters in Abhängigkeit von der Differenz zwischen der Temperatur der Frischluft vor dem Eintritt in den Wärmetauscher und vor einer Erwärmung durch das mindestens eine Heizelement und der Temperatur der durch den Wärmetauscher geführten Raumluft nach ihrem Austritt aus dem Wärmetauscher durchgeführt wird.

Abhängig insbesondere von der Außentemperatur, der Temperaturanhebung bei der Vorerwärmung, der Raumluftfeuchte und der Volumenströme durch den Wärmetauscher (die für die Frischluft und die Raumluft vorzugsweise gleich sind) ändert sich das Verhältnis der Dauer einer Erwärmungsphase (=Abtauphase) zur Dauer der vorausgehenden Phase ohne Vorerwärmung der dem Wärmetauscher zugeführten Frischluft. Vorzugsweise beträgt dieses Verhältnis weniger als 0,25, d.h. die Dauer einer jeweiligen Erwärmungsphase ist kürzer als ein Viertel der Dauer der vorausgehenden Phase ohne Vorerwärmung der Außenluft. Beispielsweise kann pro Stunde eine Abtauphase von meist 1-3 Minuten, in Extremfällen von maximal 10 Minuten erforderlich sein. Wenn über diese Zeit eine Reduktion der Volumenströme der Raumluft und der Frischluft durch den Wärmetauscher erfolgt, so führt dies im Allgemeinen zu einer insgesamt völlig vernachlässigbaren Luftmengenreduktion der Belüftung, die beispielsweise im Bereich von meist 1% und in Extremfällen 5% liegen kann.

Die Beginnzeiten der Erwärmungsphasen können beispielsweise periodisch sich wiederholend festgelegt werden. Es könnte aber auch eine andere Messgröße herangezogen werden, beispielsweise der Druckabfall im Fortluftkanal des Wärmetauschers.

Erwärmungsphasen der Frischluft werden nur bei Außentemperaturen durchgeführt, bei denen eine Vereisungsgefahr besteht. Es wird hierzu ein Temperaturgrenzwert festgelegt, unterhalb von dem sich wiederholende Erwärmungsphasen durchgeführt werden. Dieser Temperaturgrenzwert kann sich auf die Temperatur der dem Wärmetauscher zugeführten Frischluft vor dem Eintritt in den Wärmetauscher und vor einer Erwärmung durch das mindestens eine Heizelement (=Außentemperatur oder Au-βenlufttemperatur) und/oder auf die Temperatur der durch den Wärmetauscher geführten Raumluft nach ihrem Verlassen des Wärmetauschers (=Fortlufttemperatur) beziehen.

Beispielsweise kann als Temperaturgrenzwert ein Wert der Außentemperatur herangezogen werden, wobei der Temperaturgrenzwert dann jedenfalls unter -1° Celsius liegt, beispielsweise bei -4° Celsius. Als Grenzwert kann stattdessen auch ein Wert der Fortlufttemperatur (=Temperatur der Raumluft nach dem Verlassen des Wärmetauschers) oder eine Kombination der Außentemperatur und der Fortlufttemperatur herangezogen werden. Besonders vorteilhaft ist es, für den Grenzwert den Mittelwert zwischen der Temperatur der dem Wärmetauscher zugeführten Frischluft (vor einer Vorerwärmung und vor dem Eintritt in den Wärmetauscher) und der Temperatur der durch den Wärmetauscher geführten Raumluft nach Verlassen des Wärmetauschers (=Fortlufttemperatur) zu verwenden, wobei Erwärmungsphasen genau dann durchgeführt werden, wenn dieser Mittelwert kleiner als 0° Celsius ist. Bei kleineren Temperaturen wird es zu Oberflächentemperaturen von Bereichen des Abluftkanals des Wärmetauschers kommen, die unter dem Gefrierpunkt liegen. Bei einem solchen unter 0° Celsius liegenden Temperaturmittelwert der genannten Temperaturen beträgt die Temperatur der dem Wärmetauscher zugeführten Frischluft weniger als -1° Celsius (in Hinblick auf übliche Raumtemperaturen im Bereich von 18° Celsius bis 23° Celsius und auf den üblichen Wirkungsgrad eines solchen Wärmetauschers im Bereich von 90%).

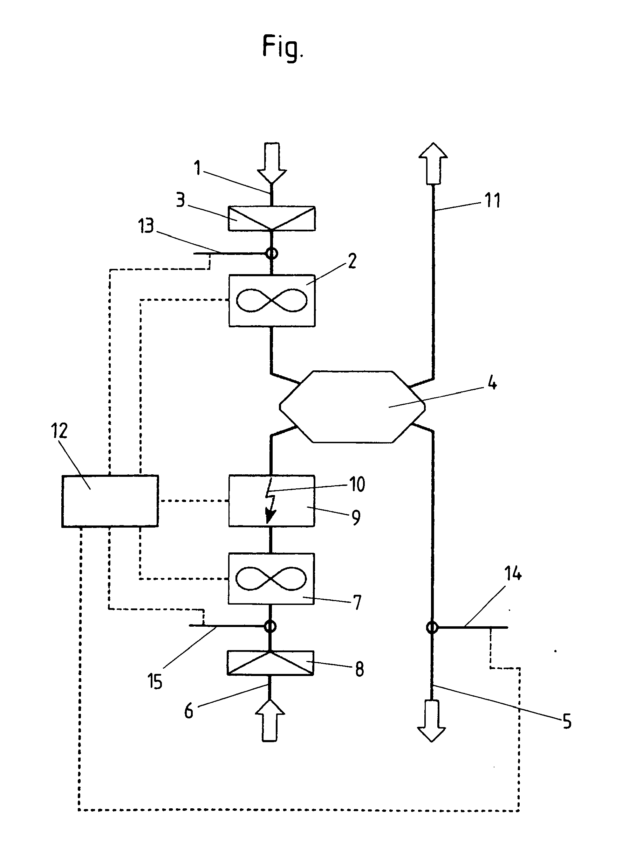

Weitere Vorteile und Einzelheiten der Erfindung werden im Folgenden anhand der beiliegenden Zeichnung erläutert: In dieser zeigt die einzige Figur eine schematische Darstellung eines Ausführungsbeispiels eines Lüftungsgeräts zur Durchführung des erfindungsgemäßen Verfahrens.

Das in der Figur dargestellte Lüftungsgerät umfasst einen Eingang 1 für die aus dem Gebäudeinneren abgeleitete Raumluft. Diese wird bei ihrer Zuführung zum Lüftungsgerät üblicherweise als Abluft bezeichnet und ihr Volumenstrom ist in der Figur durch einen Pfeil angedeutet. Die Raumluft wird mittels eines Ventilators 2 durch einen Filter 3 und einen Abluftkanal des Wärmetauschers 4 geführt und verlässt das Lüftungsgerät bei einem Ausgang 5 als Fortluft. Die Fortluft wird ins Freie abgeführt. Der Volumenstrom der Fortluft ist in der Figur durch einen Pfeil angedeutet.

Die aus dem Freien zugeführte Frischluft wird einem Eingang 6 des Lüftungsgeräts zugeführt. Die Frischluft wird bei ihrem Eintritt in das Lüftungsgerät üblicherweise als Außenluft bezeichnet und ihr Volumenstrom ist in der Figur durch einen Pfeil angedeutet. Mittels eines Ventilators 7 wird die Frischluft durch den Filter 8, eine Heizstation 9 mit einem elektrischen Heizelement 10 und durch den Zuluftkanal des Wärmetauschers 4 zum Ausgang 11 geführt. Die den Ausgang 11 verlassende Luft wird üblicherweise als Zuluft bezeichnet und ihr Volumenstrom ist in der Figur durch einen Pfeil angedeutet.

Das Lüftungsgerät umfasst weiters eine Steuerung 12, der verschiedene, weiter unten erläuterte Messgrößen zugeführt werden und die das Lüftungsgerät in der ebenfalls noch zu beschreibenden Weise steuert. Diese Steuerung kann für ein oder mehrere Größen in einem geschlossenen Kreis (=Regelkreis) erfolgen, d.h. die Begriffe "Steuerung" und "steuern" sollen auch die Begriffe "Regelung" und "regeln" umfassen.

Die Ein- und Ausgänge 1, 6; 5, 11 werden von Rohranschlussflanschen gebildet.

Im Wärmetauscher 4 erfolgt in üblicher Weise eine Energierückgewinnung aus der durch das Lüftungsgerät geführten Raumluft, indem Wärme der Raumluft auf die Frischluft übertragen wird. Bei niedrigen Temperaturen, bei denen Oberflächentemperaturen von Wänden des Abluftkanals des Wärmetauschers 4 unter dem Gefrierpunkt liegen, wird zum Verhindern eines Verschlusses des Abluftkanals des Wärmetauschers durch gefrierendes Kondensat das im Folgenden genauer erläuterte Verfahren zur "Frostfreihaltung" des Wärmetauschers 4 durchgeführt:

In sich wiederholenden Erwärmungsphasen, die auch als Auftauphasen bezeichnet werden können, wird die dem Zuluftkanal des Wärmetauschers 4 zugeführte Frischluft in der Heizstation 9 vorgewärmt, und zwar auf eine jedenfalls über dem Gefrierpunkt liegende Temperatur, vorzugsweise auf eine jedenfalls über 10° Celsius liegende Temperatur. Hierdurch wird gefrorenes Kondensat, welches sich im Abluftkanal des Wärmetauschers 4 in der vor der Erwärmungsphase liegenden Phase, in welcher keine Vorerwärmung der zugeführten Frischluft durchgeführt worden ist, gebildet hat, wieder abgetaut.

Über die Zeitdauer einer jeweiligen Erwärmungsphase bzw. Abtauphase werden die Volumenströme der durch den Wärmetauscher 4 geführten Raumluft und der durch den Wärmetauscher 4 geführten Frischluft vorzugsweise verringert. Die Volumenströme durch den Zuluft- und Abluftkanal des Wärmetauschers 4 haben hierbei günstigerweise sowohl zwischen den Erwärmungsphasen den gleichen (höheren) Wert als auch in den Erwärmungsphasen den gleichen (niedrigeren) Wert.

Die Volumenströme der Raumluft und der Frischluft können durch die Ventilatoren 2, 7 eingestellt werden, die von der Steuerung 12 entsprechend angesteuert werden.

Beispielsweise werden die Volumenströme während der Erwärmungsphasen auf einen Wert von 80 m3/h reduziert und die Frischluft wird in der Heizstation 9 mit einer Leistung von 1,2 kW erwärmt. Dies führt zu einer Temperaturerhöhung ●t der Frischluft bei ihrem Durchtritt durch die Heizstation 9 von etwa 45 Kelvin (K).

Durch eine solche Erwärmung der Frischluft liegt die Temperatur der durch den Wärmetauscher geführten Raumluft bei ihrem Austritt aus dem Wärmetauscher (=Fortlufttemperatur) beispielsweise im Bereich von 20° Celsius bis 40° Celsius (je nach Außentemperatur) und schon nach wenigen Minuten ist die erforderliche Energiemenge eingebracht, um das gesamte Eis zu schmelzen.

Wieviel Eis zwischen zwei Erwärmungsphasen tatsächlich gebildet wird, hängt von der Luftmenge (also dem Volumenstrom mal der Zeit zwischen den beiden Abtauphasen), der Außentemperatur und der Abluftfeuchte ab. Aus diesen Größen kann die maximale Kondensatmenge und somit die maximal abzutauende Eismenge ermittelt werden, zu welchem Zweck beispielsweise auch eine empirische Formel ermittelt werden kann (diese kann je nach Typ des verwendeten Wärmetauschers etwas unterschiedlich sein). Aus der maximal zu erwartenden Eismenge ergibt sich die zur Abtauung erforderliche Wärmemenge Q_abtau aus dem Produkt dieser maximal zu erwartenden Eismenge und der Schmelzwärme des Wassers, welche 0,093 Wh/g beträgt (die Erwärmung des Eises auf 0° Celsius kann hierbei vernachlässigt werden).

Zur Bestimmung der Luftfeuchtigkeit der Abluft kann anstelle eines (relativ teuren) Luftfeuchtigkeitssensors auch die Bestimmung der Differenz zwischen der Temperatur der Raumluft nach dem Durchtritt durch den Wärmetauscher 4 (=Fortlufttemperatur) und der Außenlufttemperatur herangezogen werden. Je größer diese Temperaturdifferenz ist, desto höher ist die Luftfeuchtigkeit der Abluft und umso größer ist damit die Kondensatmenge, wobei ein zumindest annähernd linearer Zusammenhang vorliegt.

Die in Abhängigkeit von der Außentemperatur zur Verfügung stehende Abluftleistung errechnet sich zu:

$$P\_abluft = (t\_raumluft - 0,9 \times (t\_raumluft - (t\_außenluft + ●t))) \times V \times 0,33$$

wobei t_raumluft der Temperatur der Raumluft vor dem Eintritt in den Wärmetauscher, t_außenluft der Temperatur der Frischluft vor dem Eintritt in den Wärmetauscher und vor der Vorerwärmung, ●t der Temperaturdifferenz, um die die Frischluft (in m³/h) der Heizstation erwärmt wird, und V dem Volumenstrom der Raumluft und der Frischluft entspricht. 0,9 ist für den typischen Wirkungsgrad solcher Wärmetauscher eingesetzt und 0,33 bezeichnet die spezifische Wärmekapazität der Luft (in Wh/m3K). Die erforderliche Abtaudauer (=Dauer der Erwärmungsphase) in Sekunden ergibt sich dann aus:

$$\text{Abtaudauer} = (Q\_abtau \text{ [Wh]} / P\_abluft \text{ [W]}) \times 3600 \text{ [s/h]}$$

Die generelle Voraussetzung für die Eisbildung ist es, dass zumindest ein Abschnitt der Wand des Abluftkanals des Wärmetauschers eine Oberflächentemperatur aufweist, die unter 0° C liegt. Die niedrigste Oberflächentemperatur des Wärmetauschers tritt beim Eintritt der Außenluft und Austritt der Fortluft auf und ergibt sich daher aus dem Mittelwert dieser beiden Temperaturen. Als Grenzwert für die Durchführung der intermittierenden Vorerwärmung der Frischluft kann somit dieser Mittelwert herangezogen werden, wobei die intermittierende Vorerwärmung nur durchgeführt wird, wenn dieser Mittelwert (t_außenluft + t_fortluft) / 2 < 0 ist.

Zur Erfassung der Temperatur der dem Wärmetauscher zugeführten Raumluft (t_raumluft) vor dem Eintritt in den Wärmetauscher 4 ist in der Figur ein Temperatursensor 13 eingezeichnet, dessen Ausgangssignal der Steuerung 12 zugeführt wird. Der Temperatursensor 14 dient zur Erfassung der Temperatur der Raumluft nach dem Verlassen des Wärmetauschers 4 (= t_fortluft) und das Ausgangssignal dieses Temperatursensors 14 wird ebenfalls der Steuerung 12 zugeführt. Der Temperatursensor 15 dient zur Erfassung der dem Wärmetauscher 4 zugeführten Frischluft, vor Durchtritt durch die Heizstation 9 (= t_außenluft) und das Ausgangssignal des Temperatursensors 15 wird wiederum der Steuerung 12 zugeführt.

In Abhängigkeit von den erfassten Größen wird von der Steuerung 12 die Dauer einer jeweiligen Erwärmungsphase bestimmt und die Frischluft über die entsprechende Heizdauer in der Heizstation 9 aufgeheizt. Die Erwärmungsphasen werden im Ausführungsbeispiel zu sich periodisch wiederholenden Beginnzeiten durchgeführt, beispielsweise jede Stunde.

Weitere oder andere Messgrößen zur Steuerung des Verfahrens, beispielsweise zur Steuerung der Dauer der jeweiligen Erwärmungsphase können vorgesehen sein. Beispielsweise könnte auch die Leistung, mit der die Luft in der Heizstation 9 aufgeheizt wird, gesteuert werden. Beispielsweise könnte anstelle des Temperatursensors 14 zur Erfassung der Temperatur der Fortluft auch ein Feuchtigkeitssensor zur Erfassung der Feuchtigkeit der dem Wärmetauscher zugeführten Raumluft vorgesehen sein.

Beispielsweise könnte auch die Temperaturdifferenz, um die die Frischluft in der Heizstation 9 aufgeheizt wird, in Abhängigkeit von der Außentemperatur verändert werden. Hierbei könnte vorgesehen sein die Frischluft in der Heizstation 9 auf einen, zumindest weitgehend, konstanten von der Außentemperatur unabhängigen Wert aufzuheizen, beispielsweise auf einen im Bereich zwischen 35° Celsius und 45° Celsius liegenden Wert.

Auch die Reduktion des Volumenstroms könnte beispielsweise in Abhängigkeit von der Temperatur der Außenluft durchgeführt werden.

Eine Energieeinsparung ergibt sich auch durch eine Steuerung, welche weniger Eingangsgrößen berücksichtigt, beispielsweise die tatsächliche Luftfeuchtigkeit der Abluft unberücksichtigt lässt und für einen maximal zu erwartenden Wert dieser Luftfeuchtigkeit ausgelegt ist.

Legende zu den Hinweisziffern:

1    Eingang Raumluft

2    Ventilator

3    Filter

4    Wärmetauscher

5    Ausgang Raumluft

6    Eingang Frischluft

7    Ventilator

8    Filter

9    Heizstation

10     Heizelement

11     Ausgang Frischluft

12     Steuerung

13     Temperatursensor

14     Temperatursensor

15     Temperatursensor

**Patentansprüche**

1.  Verfahren zum Betreiben einer Lüftungseinrichtung, die einen Wärmetauscher (4) mit einem Abluftkanal, durch den aus dem Gebäudeinneren abgeführte Raumluft strömt, und einem Zuluftkanal aufweist, durch den aus dem Freien zugeführte Frischluft strömt, wobei unterhalb eines Temperaturgrenzwertes zum Verhindern eines Verschlusses des Abluftkanals des Wärmetauschers (4) in Folge Vereisung die dem Zuluftkanal zugeführte Frischluft mit mindestens einem Heizelement (10) erwärmt wird, **dadurch gekennzeichnet, dass** die Erwärmung der Frischluft mit dem mindestens einen Heizelement (10) in sich wiederholenden Erwärmungsphasen durchgeführt wird, wobei zwischen den Erwärmungsphasen, in denen die Frischluft erwärmt wird, eine Bildung von Eis zugelassen wird, welches in der folgenden Erwärmungsphase der Frischluft wieder geschmolzen wird.

2.  Verfahren nach Anspruch 1, **dadurch gekennzeichnet, dass** während der Erwärmungsphasen, in denen die Erwärmung der Frischluft mit dem mindestens einen Heizelement (10) durchgeführt wird, die Volumenströme der durch den Wärmetauscher (4) geführten Raumluft und der durch den Wärmetauscher (4) geführten Frischluft verringert werden.

3.  Verfahren nach Anspruch 2, **dadurch gekennzeichnet, dass** die Volumenströme der dem Wärmetauscher (4) zugeführten Raumluft und der dem Wärmetauscher (4) zugeführten Frischluft während der Erwärmungsphasen auf einen Wert reduziert werden, der im Bereich von 70m3/h bis 100m3/h liegt.

4.  Verfahren nach einem der Ansprüche 1 bis 3, **dadurch gekennzeichnet, dass** die Erwärmungsphasen zu sich periodisch wiederholenden Beginnzeiten durchgeführt werden.

5.  Verfahren nach einem der Ansprüche 1 bis 4, **dadurch gekennzeichnet, dass** die Erwärmungsphasen unterschiedlich lang, in Abhängigkeit von mindestens einer von der Menge des gebildeten Eises abhängenden Messgröße, vorzugsweise zumindest in Abhängigkeit vom Volumenstrom der durch den Wärmetauscher (4) geführten Raumluft, durchgeführt werden.

6.  Verfahren nach Anspruch 5, **dadurch gekennzeichnet, dass** die Dauer einer jeweiligen Erwärmungsphase weiters in Abhängigkeit von der Differenz zwischen der Temperatur der Frischluft vor dem Eintritt in den Wärmetauscher und vor einer Erwärmung durch das mindestens eine Heizelement (10) und der Temperatur der durch den Wärmetauscher (4) geführten Raumluft nach ihrem Austritt aus dem Wärmetauscher durchgeführt wird.

7.  Verfahren nach Anspruch 5 oder 6, **dadurch gekennzeichnet, dass** die Dauer einer jeweiligen Erwärmungsphase in Abhängigkeit von der Temperatur der dem Wärmetauscher (4) zugeführten Raumluft vor ihrem Eintritt in den Wärmetauscher (4) durchgeführt wird.

8.  Verfahren nach einem der Ansprüche 1 bis 7, **dadurch gekennzeichnet, dass** die Dauer einer jeweiligen Erwärmungsphase kürzer als ein Viertel der Dauer der vor der Erwärmungsphase liegende Phase ist, in der keine Erwärmung der Frischluft mit dem mindestens einen Heizelement (10) durchgeführt wird.

9.  Verfahren nach einem der Ansprüche 1 bis 8, **dadurch gekennzeichnet, dass** die Frischluft in den Erwärmungsphasen mit dem mindestens einen Heizelement (10) um mindestens 30 K, vorzugsweise um mindestens 40 K erwärmt wird.

**10.** Verfahren nach einem der Ansprüche 1 bis 9, **dadurch gekennzeichnet, dass** sich der Temperaturgrenzwert, unterhalb von dem die sich wiederholende Erwärmung der dem Wärmetauscher (4) zugeführten Frischluft mit dem mindestens einen Heizelement (10) durchgeführt wird, auf die Temperatur der dem Wärmetauscher zugeführten Frischluft vor ihrem Eintritt in den Wärmetauscher (4) und vor einer Erwärmung durch das mindestens eine Heizelement (10) und/oder auf die Temperatur der durch den Wärmetauscher (4) geführten Raumluft nach Verlassen des Wärmetauschers (4) bezieht, vorzugsweise auf den Mittelwert zwischen der Temperatur der dem Wärmetauscher zugeführten Frischluft vor Eintritt in den Wärmetauscher (4) und vor einer Erwärmung durch das mindestens eine Heizelement (10) und der Temperatur der durch den Wärmetauscher (4) geführten Raumluft nach dem Verlassen des Wärmetauschers, wobei sich wiederholende Erwärmungsphasen nur durchgeführt werden, wenn dieser Mittelwert kleiner als 0° Celsius ist.

Fig.